(19)

Europäisches
Patentamt
European
Patent Office
Office européen
des brevets

(11) **EP 2 141 624 A1**

(12) **EUROPEAN PATENT APPLICATION**

(43) Date of publication:
**06.01.2010 Bulletin 2010/01**

(51) Int Cl.:
***G06F 21/00*** (2006.01)          ***G06F 21/02*** (2006.01)

(21) Application number: **09164210.8**

(22) Date of filing: **30.06.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **30.06.2008  KR 20080062533**

(71) Applicant: **Samsung Electronics Co., Ltd.
Suwon-si, Gyeonggi-do (KR)**

(72) Inventors:
• **Kang, Jin Ug
  Gyeonggi-do (KR)**

• **Han, Kyu Hui
  Gyeonggi-do (KR)**
• **Lee, Kyung Keun
  Gyeonggi-do (KR)**

(74) Representative: **Harrison Goddard Foote
106 Micklegate
York
YO1 6JX (GB)**

(54) **DRM time setting method and apparatus of portable terminal**

(57)     A method and apparatus for setting a Digital Rights Management (DRM) time for a DRM-enabled portable terminal for securing a reliable DRM time are provided. The method includes detecting a DRM time setting event, acquiring a reference time and a local time upon detection of the DRM time setting event, determining a reference value using the reference time and the local time, and setting the DRM time or the portable terminal based on the reference value.

**FIG. 1**

EP 2 141 624 A1

**Description**

## BACKGROUND OF THE INVENTION

1. Field of the Invention:

The present invention relates to Digital Rights Management (DRM). More particularly, the present invention relates to a method and apparatus for setting DRM time of a DRM-enabled portable terminal that enables securing a reliable DRM time.

2. Description of the Related Art:

With the widespread use of the Internet and advances of multimedia and communication technologies, various digital contents are distributed and shared over a network. Without a copyright protection policy, however, the advanced network environment and technologies may be tools that will be used for illegal distributions of the contents.

Digital Rights Management (DRM) systems have been developed to prevent an illegal use and distribution of copyrighted contents. DRM is a term that refers to access control technologies for protecting copyrights of authors and content providers.

The DRM provides a controlled consumption of digital contents and protects the intellectual property rights of the authors and the content providers.

Typically, encrypted DRM contents can be freely accessed and downloaded. In order to use the DRM contents, however, a license called a Rights Object (RO) is required for decoding the encrypted DRM contents. With its efficient usage control, the DRM can be used by many copyright holders.

DRM technologies attempt to prevent illegal use and distribution of the digital contents through all the phases of creation, distribution, use, and abrogation, and restrict access and usage rights of a user on the digital contents. The DRM allows the user having a valid encryption key, such as the RO, to decode the encrypted digital content such that the digital content can be protected even when being illegally distributed.

The RO is a container used in the Open Mobile Alliance (OMA) DRM system, which is an open DRM standard established by the OMA, for carrying a license key to decrypt the corresponding DRM contents. The RO is issued by a Rights Issuer (RI) and purchased by an end user. Since the digital content and corresponding RO are delivered in a detached manner, the usage of downloaded content is restricted to the user that acquired the corresponding RO.

The RO is a collection of permission, constraints, and other attributes that define under what circumstances access is granted to the DRM content and what usages are defined for the DRM content. Typically, the usage constraints include Count, DateTime, Interval, Timed-Count, Accumulated and Individual. The constraints are stored in a specific field of the RO.

For example, the RO may specify the usage for a Motion Picture Experts Group (MPEG)-1 Audio Layer 3 (MP3) file with the count constraint value set to "10". In this case, the MP3 file can be played 10 times and the count is decremented by 1 whenever the MP3 file is played. If the count value becomes "0", the usage right on the MP3 file expires. In order to maintain the usage right on the MP3 file, the corresponding RO should be updated.

Meanwhile, DRM time is used to determine the validity of the time-based DRM protected contents consumable within the interval and datetime-restricted ROs. Accordingly, when the local time of the portable terminal differs from the valid DRM time, the time-constrained contents stored in the portable terminal are restricted in use according to the DRM policy.

Therefore, a need exists for a DRM time setting method and apparatus of a portable terminal for controlling use of DRM protected contents.

## SUMMARY OF THE INVENTION

An aspect of the present invention is to address at least the above-mentioned problems and/or disadvantages and to provide at least the advantages described below. Accordingly, an aspect of the present invention is to provide a Digital Rights Management (DRM) time setting method and apparatus of a portable terminal for securing a valid DRM time for controlling use of time-based DRM contents while abiding by a DRM policy.

Another aspect of the present invention is to provide a DRM time setting method and apparatus of a portable terminal for securing a valid DRM time with reference to a reference time extracted from a Hyper Text Transfer Protocol (HTTP) header received from a network.

Still another aspect of the present invention is to provide a DRM time setting method and apparatus of a portable terminal for securing its DRM time with reference to a reference time acquired from different adjacent systems.

A further aspect of the present invention is to provide a DRM time setting method and apparatus of a portable terminal for securing its DRM time in an environment that does not support a Right Object Acquisition Protocol (ROAP) and a Network Identity and Time Zone (NITZ) protocol.

In accordance with an aspect of the present invention, a Digital Rights Management (DRM) time setting method for a portable terminal is provided. The method includes detecting a DRM time setting event, acquiring a reference time and a local time upon detection of the DRM time setting event, determining a reference value using the reference time and the local time, and setting the DRM time based on the reference value.

In accordance with another aspect of the present invention, a Digital Rights Management (DRM) time setting method for a portable terminal including a download agent, a DRM agent and a user clock is provided. The method includes requesting, at the download agent, the DRM agent to set a DRM time after acquiring a reference time upon detection of a DRM time setting event, acquiring, at the DRM agent, a local time from the user clock in response to the DRM time setting request, determining, at the DRM agent, a reference value from a difference between the reference time and the local time, and setting, at the DRM agent, a DRM time based on the reference value.

In accordance with still another aspect of the present invention, a Digital Rights Management (DRM) time setting method for a portable terminal is provided. The method includes determining, when a playback of a content is request, whether a preset reference value exists, determining, when no reference value exists, a reference value for a DRM time, setting, when a reference value exists, the DRM time based on the reference value, determining, with reference to the DRM time, whether a rights object of the content is valid, and executing the content when the rights object of the content is valid.

In accordance with a further aspect of the present invention, a portable terminal is provided. The portable terminal includes a radio frequency unit for transmitting and receiving radio signals carrying contents, rights objects, and messages related to reference time acquisition, a memory unit for storing applications associated with Digital Rights Management (DRM) time management, the contents, the rights objects corresponding to the contents, and the reference time, and a control unit for managing the DRM time based on the reference time and a local time of the portable terminal.

Other aspects, advantages, and salient features of the invention will become apparent to those skilled in the art from the following detailed description, which, taken in conjunction with the annexed drawings, discloses exemplary embodiments of the invention.

## BRIEF DESCRIPTION OF THE DRAWINGS

The above and other aspects, features and advantages of certain exemplary embodiments of the present invention will be more apparent from the following description taken in conjunction with the accompanying drawings, in which:

FIG. 1 is a diagram illustrating a Digital Rights Management (DRM) time setting method according to an exemplary embodiment of the present invention;

FIG. 2 is a diagram illustrating a DRM time setting method according to an exemplary embodiment of the present invention;

FIG. 3 is a block diagram illustrating a configuration of a portable terminal according to an exemplary embodiment of the present invention;

FIG. 4 is a message flow diagram illustrating message flows in a DRM time setting method according to an exemplary embodiment of the present invention;

FIG. 5 is a message flow diagram illustrating message flows in a DRM time setting method according to an exemplary embodiment of the present invention;

FIG. 6 is a flowchart illustrating a DRM time setting method for a portable terminal according to an exemplary embodiment of the present invention; and

FIG. 7 is a flowchart illustrating a content execution procedure of a DRM time setting method according to an exemplary embodiment of the present invention.

Throughout the drawings, it should be noted that like reference numbers are used to depict the same or similar elements, features and structures.

## DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Exemplary embodiments of the present invention provide a technical solution that allows securing a valid Digital Rights Management (DRM) time efficiently and using the time-based DRM protected contents with the valid DRM time while abiding by a DRM policy.

Exemplary embodiments of the present invention provide various technical solutions for a portable terminal, which supports a connection to a system implemented with a low version of a DRM application rather than an advanced protocol, such as an Online Certificate Status Protocol (OCSP), to secure the valid DRM time. In an exemplary implementation, a technical solution for acquiring a reference time to secure the valid DRM time is proposed.

In an exemplary embodiment of the present invention, the reference time may be a Greenwich Mean Time (GMT) and acquired through a network connection with a Hyper Text Transfer Protocol (HTTP). However, the present invention is not limited thereto and may be implemented with various types of reference times and connections as described below.

A DRM time setting method according to an exemplary embodiment of the present invention is described hereinafter with reference to the drawings.

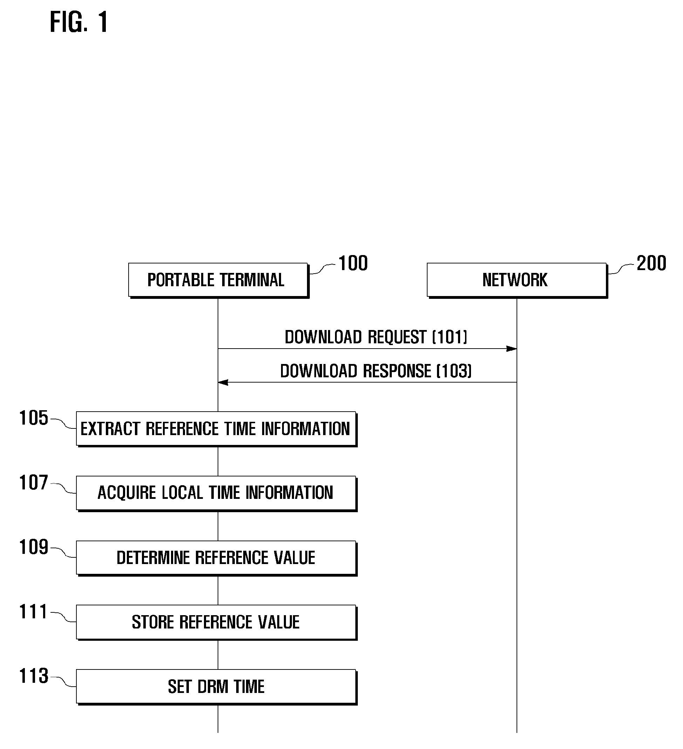

FIG. 1 is a diagram illustrating a DRM time setting method according to an exemplary embodiment of the present invention.

In FIG. 1, the portable terminal 100 acquires the reference time while downloading a digital content from the network 200 and configures the secure time of the portable terminal 100 based on the reference time. Here, the reference time is the GMT, and the secure time is the aforementioned valid DRM time.

Referring to FIG. 1, the portable terminal 100 transmits a Download Request message to the network 200 for downloading a specific content indicated by a user instruction in step 101. Upon receipt of the Download Request message, the network 200 transmits a Download Response message to the portable terminal 100 in response to the Download Response message in step 103. The Download Response message includes the content indicated by the Download Request message and reference time information in its header. The reference time information may be one of a GMT, a day, a date, and an accurate time (hour: minute: second).

Once the Download Response message is received from the network 200, the portable terminal 100 extracts the reference time information from the header of the Download Response message in step 105. Here, the header may be an HTTP header. The portable terminal 100 acquires the reference time information for securing a reliable DRM time, and the reference time information may include the GMT.

After extracting the reference time information, the portable terminal 100 acquires the local time information in step 107. The local time information is provided by a Real Time Clock that keeps track of the current time (hour: minute: second) and the current date of the portable terminal 100. The local time information acquired from a user clock of the portable terminal 100. The local time information may be used as the DRM time referred to as a Rights Object (RO) count for a corresponding content.

The portable terminal 100 then determines a reference value for acquiring a reliable DRM time from the reference time information and the local time information in step 109. The reference value is the difference between the reference time information and the local time information.

Once the reference value is obtained, the portable terminal stores the reference value in step 111 and sets the DRM time with reference to the reference value in step 113. For instance, when a specific content is executed, the RO count of the portable terminal 100 operates with reference to the DRM time compensated with the reference value rather than the local time information.

When it is determined that the local time information is changed, the portable terminal 100 determines a new reference value and updates the DRM time using the new reference value to secure reliability of the DRM time. The update of the reference value may be performed periodically with the reference time information acquired from a specific network or at least one adjacent system, or acquired by means of a supplementary function of the portable terminal 100.

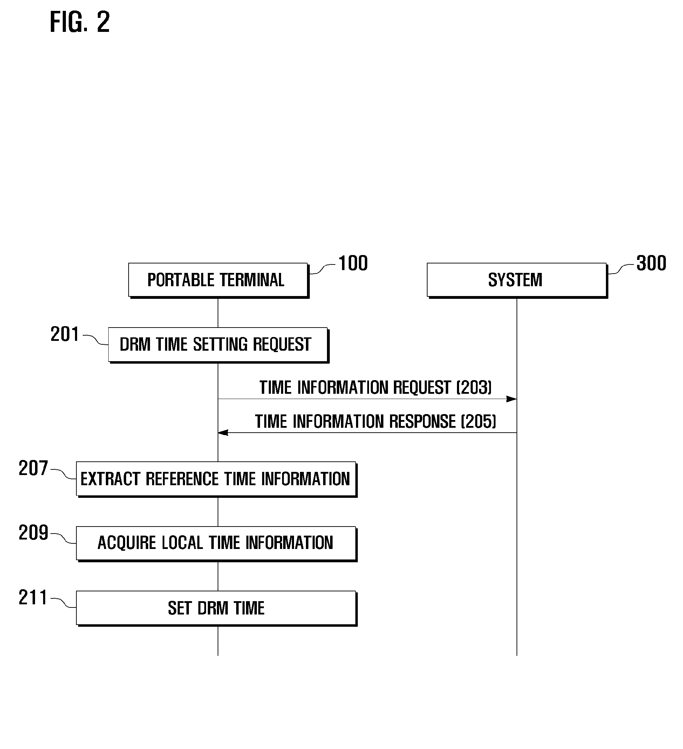

FIG. 2 is a diagram illustrating a DRM time setting method according to an exemplary embodiment of the present invention.

Referring to FIG. 2, the portable terminal 100 acquires the reference time information from an adjacent system 300 and sets the valid DRM time with reference to the reference time information. The reference time information sets the DRM time of the portable terminal 100 and may be the time information managed by the system 300.

In an exemplary implementation, the system 300 may be a device located near the portable terminal 100. The system 300 may be any type of communication and multimedia device, such as a personal computer (PC), a laptop computer, a printer, a Personal Digital Assistant (PDA), a Portable Multimedia Player (PMP), an Motion Picture Experts Group (MPEG)-1 Audio Layer 3 (MP3) player, a digital broadcast receiver, a mobile communication device, and the like.

The system 300 may be connected with the portable terminal 100 through a wired communication link or a wireless communication link. In the case of a wired connection, the portable terminal 100 connects to the system 300 by means of a wire, such as a data cable. In the case of a wireless connection, the portable terminal 100 connects to the system 300 through a wireless channel established by means of a wireless communication technology, such as Bluetooth, Infrared Data Association (IrDA), Wireless Fidelity (Wi-Fi), and the like.

The system 300 may exchange messages with the portable terminal 100 by means of one of the wired connection and the wireless connection. For instance, the portable terminal 100 requests the system 300 for the time information through a wireless channel, the system 300 transmits the time information to the portable terminal 100 through the wireless channel.

If the portable terminal 100 has a device for a specific supplementary function, the system 300 may include a transmit station corresponding to the device for supporting the supplementary function. The supplementary function may be one of a Global Positioning System (GPS) function, a radio function and a digital broadcast function. Correspondingly, the device may be one of a GPS receiver, a radio receiver and a digital broadcast receiver. Also, the transmit station may be one of a satellite, a radio station and a digital broadcast station.

Although depicted with a single system 300 in FIG. 2, the present invention may be implemented with multiple systems. In this case, the portable terminal 100 may be configured to receive the reference time information from multiple systems and uses an average value of the reference time information received from the multiple systems.

Referring to FIG. 2, the portable terminal 100 detects a DRM time setting instruction in step 201 and transmits a time information request message to an adjacent system 300 according to a preset communication protocol in step 203. The DRM time setting instruction may be generated when the local time of the portable terminal 100 is changed or a specific content is downloaded, or according to a preset schedule.

The system 300 transmits a time information response message including the requested time information to the portable terminal 100 in response to the time information request message in step 205. The time information includes the location time of the system 300. The portable terminal 100 uses the time information provided by the system as the reference time for obtaining the reference value for securing the valid DRM time.

That is, the time information is acquired from the system, the portable terminal 100 extracts the reference time from the time information in step 207. If the portable terminal 100 receives the time information from multiple systems, the average value of the time information may be used as the reference time information. When the time information is provided by a signal system, the portable terminal 100 may use the time information as the reference time information.

After acquiring the reference time, the portable terminal 100 acquires its local time in step 209. The local time may be basic time information of the portable terminal 100, i.e. a Real-Time Clock (RTC) indicating current data and time. The local time may be acquired from the user clock of the portable terminal 100.

The portable terminal 100 may set the valid DRM time based on the reference time and the local time in step 211. As aforementioned with reference to FIG. 1, the valid DRM time is determined with the reference value derived from the difference between the reference time and the local time. Although not illustrated in FIG. 2, the reference value update and setting are performed in the same manner as described in FIG. 1.

The portable terminal 100 structure is described hereinafter. However, the present invention is not limited thereto and various equivalents and modifications may be made the exemplary embodiments of the present invention.

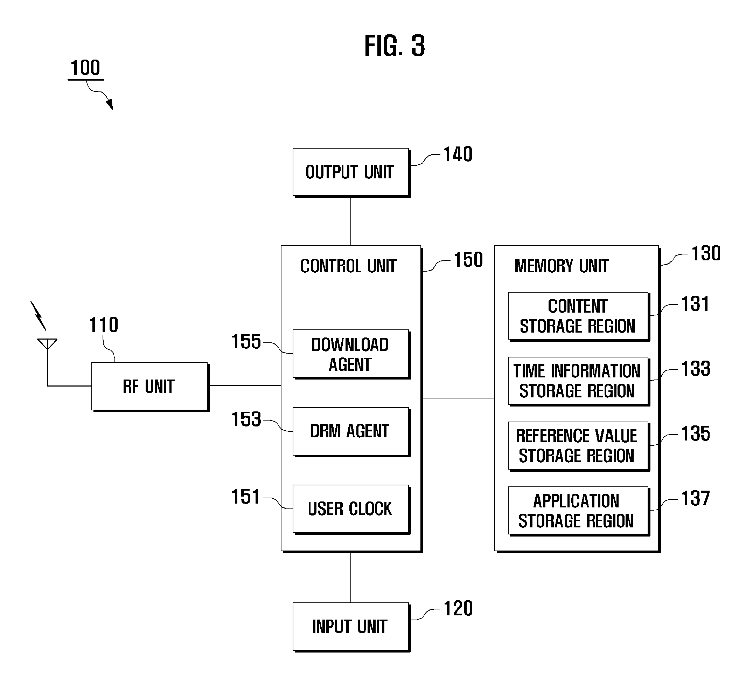

FIG. 3 is a block diagram illustrating a configuration of a portable terminal according to an exemplary embodiment of the present invention.

In an exemplary implementation, the portable device may be one of various types of communication terminals operating in association with communication systems by means of their corresponding communication protocols and electric devices, such as a Portable Multimedia Player (PMP), a MP3 player and a Personal Digital Assistant (PDA). Also, the portable terminal may be a personal computer or a laptop computer. That is, an exemplary embodiment of the present invention may be applicable to various information communication devices, multimedia devices, and the like. In an exemplary implementation, the portable terminal is configured to access a specific network (i.e., content network) via a wired Internet and a wireless Internet, and connect to other devices through one of a wired link and a wireless link.

Referring to FIG. 3, the portable terminal 100 includes a radio frequency (RF) unit 110, an input unit 120, a memory unit 130, an output unit 140 and a control unit 150.

The RF unit 110 is responsible for establishing a radio channel with a radio communication system for voice communication and data communication. More particularly, the RF unit 110 is configured for the portable terminal 100 to exchange the contents and the RO of the contents in connection with an external network. The RF unit 110 is configured to transmit and receive messages related to the reference time information (e.g., a content download request message, a content download response message, an HTTP request message, an HTTP response message, and the like).

The input unit 120 is provided with input modules of the portable terminal 100. The input unit 120 may include a key input unit for receiving user input and an audio processing unit for processing audio signals. The audio processing unit includes a microphone that processes the audio signal (e.g., voice) input through a microphone and transfers the processed audio signal to the control unit 150.

The key input unit receives alphanumeric data and instructions for configuring and executing functions of the portable terminal 100 and transfers the key sequence to the control unit 150. The key input unit may be implemented with at least one of a touchpad, a touchscreen, a normal keypad, a QWERTY keypad and special function keys.

The memory unit 130 stores applications required for the functions provided according to an exemplary embodiment of the present invention and data generated by the user or received from outside (e.g., a Network, a Rights Issuer (RI), a system, a radio station, a digital broadcast station, or another terminal). The data includes downloaded contents, time information, and user data (e.g., photo files, MP3 files, video files, documents, and the like).

The applications include a content management application for managing and controlling the DRM contents, a time management application for managing the time information of the portable terminal, a download application for controlling the download of the content through the Internet, and a DRM time configuration application for setting DRM time based on the reference time information acquired from outside and the terminal's local time. The applications may be stored in an application storage region 137 of the memory unit 130.

The memory unit 130 may include at least one buffer for buffering the data generated while the applications run. The memory unit 130 may be implemented as an internal element of the portable terminal or an external element, such as smart card, or with both internal and external media.

The memory unit 130 includes a content storage region 131 for storing the contents obtained from the network or other devices, a time information storage region 133 for storing the local time information and the reference time information obtained from at least one of the network and the systems, a reference value storage region 135 for storing the reference value obtained based on the reference time received from at least one of the network and systems, and the local time of the portable terminal 100.

The output unit 140 may include a module related to the output of the portable terminal 100. The output unit 140 includes a display unit for outputting various screen images and the audio processing unit for processing the audio signal generated in the portable terminal 100. The audio processing unit includes a speaker for outputting the audio signal (e.g., voice signal received from a counterpart terminal and audio signal of music/video files) from the control unit 150 in the form of audible sound wave.

The control unit 150 controls general operations of the portable terminal and signaling among internal blocks of the portable terminal 100. The control unit 150 controls signaling among the RF unit 110, the input unit 120, the memory unit 130 and the output unit 140. The control unit 150 includes a data processing unit composed of a codec and a mode for mobile communication service.

More particularly, the control unit 150 controls operations related to the DRM time setting operations of the portable terminal 100. The operation of the control unit 150 is described hereinafter in association with a DRM time setting procedure.

The control unit 150 manages the DRM time of the portable terminal 100. That is, the control unit 150 sets and manages the valid DRM time for executing DRM contents. When the DRM time becomes invalid due to a battery discharge, the local time is changed by the user, a specific content is downloaded and the control unit 150 updates the DRM time to be valid for the DRM contents.

Accordingly, the control unit 150 acquires the reference time information from the network 200 and/or the system 300. The control unit 150 determines the reference value for setting the valid DRM time based on the reference time information and the local time information, and manages the valid DRM time for executing the DRM contents with reference to the reference value. The control unit 150 extracts the reference time information from the HTTP header of the message received from the network 200. Also, the reference time information may be acquired from at least one system 300 responding to the time information request. The control unit 150 may control to set and update the reference value when a DRM time setting event is detected. The control unit 150 determines whether to permit execution of the content based on the validity of the DRM time set with the reference value.

The control unit 150 includes a user clock 151, a DRM agent 153 and a download agent 155 for executing the aforementioned control operations.

The user clock 151 manages the local time of the portable terminal 100. That is, the user clock 151 generates real time clock signals of the portable terminal 100. When the DRM agent 153 requests for the local time information, the user clock 151 provides the local time of the portable terminal 100 to the DRM agent 153. When a change of the local time is detected, the user clock 151 requests the DRM agent 153 to update the DRM time.

The DRM time manager 153 manages the DRM time of the portable terminal 100. That is, in order to verify the validity of the DRM time for executing the DRM contents, the DRM agent 153 determines the reference value using the reference time information provided by the download agent 155 and the local time provided by the user clock 151. The DRM agent 153 configures and updates the reference value in response to various events requiring DRM time configuration.

The download agent 155 manages to access the network in response to a content download request and downloads a specific content indicated by the content download request. The download agent 155 transmits an HTTP request message to the network in response to a reference time information request instruction and receives an HTTP response message from the network. The download agent 155 acquires the reference time information through the aforementioned message exchange. The download agent 155 also may acquire the time information transmitted by the adjacent system 300.

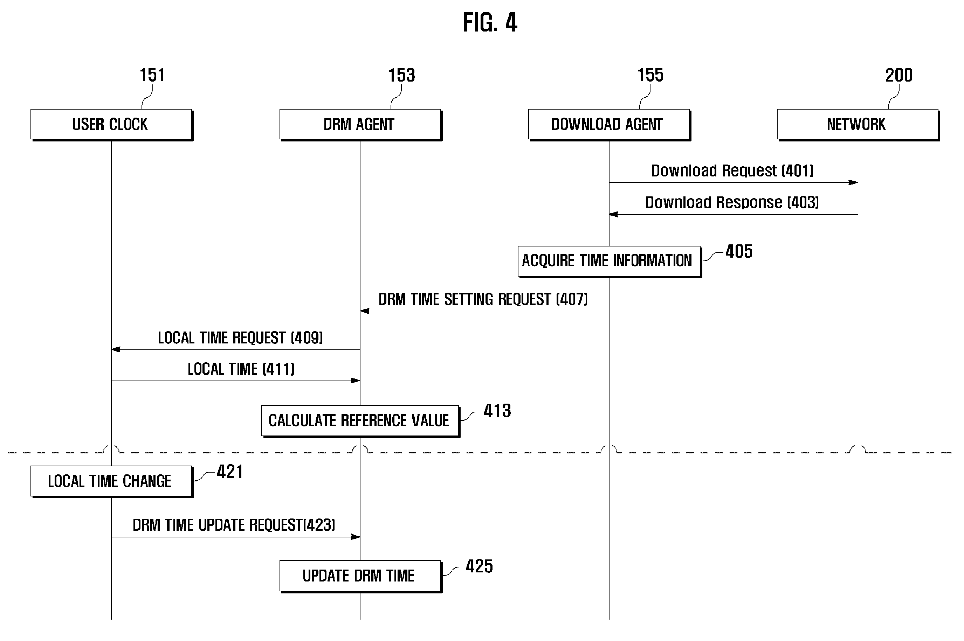

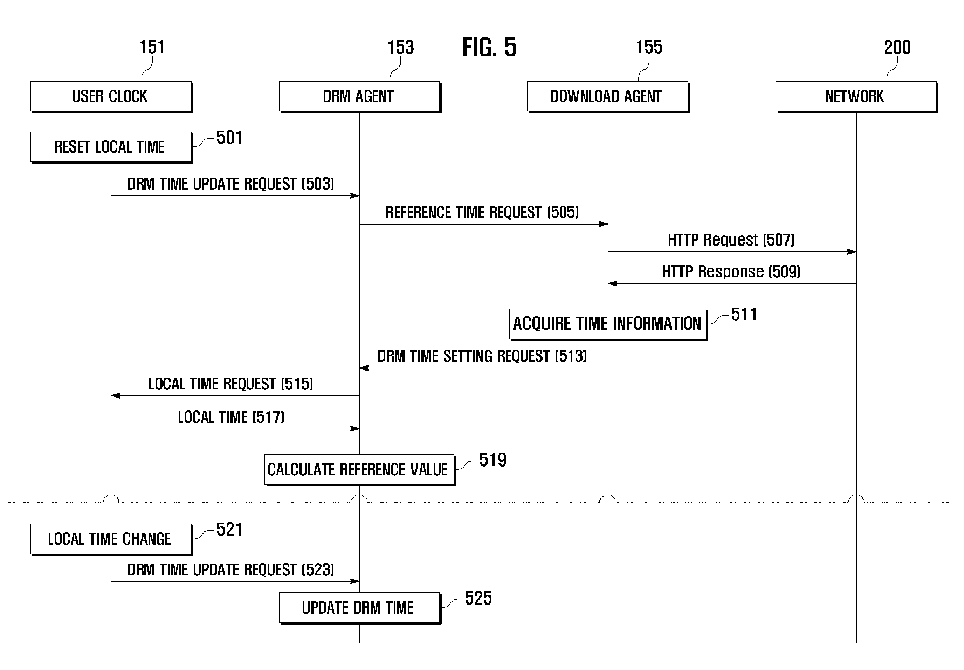

The user clock 151, the DRM agent 153 and the download agent 155 are involved in the operations described above and signaling among the entities that are described with reference to FIGs. 4 and 5.

Although the portable terminal 100 is depicted schematically in FIG. 3 for simplicity reasons, the present invention is not limited to such configuration. For instance, the portable terminal may further include at least one of a camera module, an electronic transaction module, a digital broadcast module, a short range communication module, a GPS module, an Internet access module, and the like. Also, internal blocks of the portable terminal may be selectively removed or replaced with other function blocks depending on the design concept of the portable terminal.

For instance, the portable terminal may be implemented with a short range communication module, such as Bluetooth or a Zigbee module. In this case, the portable terminal 100 may communicate with the system 300 under the control of the control unit 150. The short range communication module exchanges signals associated with acquisition of the reference time information through a wireless channel.

Also, the portable terminal 100 may be implemented with an Internet access module. In this case, the portable terminal may communicate with another terminal or network via the Internet under the control of the control unit 150. In an exemplary implementation, the Internet access module transmits and receives the signals through the Internet for acquiring the reference time information.

Also, the portable terminal 100 may be implemented with a GPS module. In this case, the control unit 150 acquires the reference time information from the GPS data received through the GPS module.

Also, the portable terminal 100 may be implemented with a digital broadcast receiver module. In this case, the control unit 150 may acquire the reference time information from the broadcast data received through the digital broadcast receiver module.

FIG. 4 is a message flow diagram illustrating message flows in a DRM time setting method according to an exemplary embodiment of the present invention.

Referring to FIG. 4, if a user instruction requesting for download of a specific content is input, the portable terminal 100 attempts to access a network 200 by means of the download agent 155 in response to a download request instruction. At this time, the download agent 155 transmits a Download Request message to the network 200, the Download Request message indicating content to be downloaded in step 401. The network 200 transmits a Download Response message including the requested content to the portable terminal 100 in response to the Download Request message in step 403.

Upon receipt of the Download Response message, the download agent 155 extracts the content from the Download Response message. Also, the download agent 155 extracts reference time information from the header of the Download Response message in step 405. The reference time information is the time information for setting the DRM time of the portable terminal 100 and may be the GMT. Here, the download agent 155 may convert the GMT extracted from the header to a value in a DRM time format. The Download Response message is composed of a message header field and a message body field. The message body field includes the content requested by the portable terminal 100. The message header field may include an identity field for identifying the network, a content type field for indicating the type of content carried in the message body, a content length field for indicating the length of the content, and a date field. More particularly, the date field indicates the time when the network 200 has generated the Download Response message. The date field may be expressed in the GMT format. The data file may be presented as shown in table 1.

Table 1

| Date: Tue, 13 NOV 2007 06:05:49 GMT \r\n |
| --- |

After extracting the reference time information, the download agent 155 transmits a DRM time setting request to the DRM agent 153 in step 407. Upon receipt of the DRM time setting request, the DRM agent 153 transmits a local time information request to the user clock 151 in step 409. The user clock 151 transmits the current local time information of the portable terminal 100 to the DRM agent 153 in response to the local time information request in step 411.

Upon receipt of the local time information, the DRM agent 153 compares the reference time information and the local time information and determines the difference between the reference time information and the local time information as a reference value in step 413. That is, the DRM agent 153 determines the difference between the reference time information and the local time information and stores the difference as the reference value for obtaining a valid DRM time. Here, the reference value may be obtained with equation (1).

$$\text{Reference value} = \text{reference time information} - \text{local time information} \quad \ldots (1)$$

The reference value for setting the valid DRM time is updated whenever the portable terminal attempts to download a specific content. The update of the reference value may be performed in such a manner that the update process is not activated during a certain period from an initial setting of the reference value and then activated with the content download attempt after the certain period has expired. The update timing may be determined by resetting a count defining the certain period when the reference value is updated. Also, the reference value update may be performed with reference to the reference time information acquired from specific networks registered in a list (e.g., white list).

If it is determined that the local time of the portable terminal 100 is changed in step 421, the user clock 151 transmits a DRM time update request to the DRM agent in step 423. For instance, the local time of the portable terminal 100 may be changed by a user's manipulation or a battery discharge. When the local time change is detected, the user clock 151 notifies the DRM agent 153 of the local time change.

Upon receipt of the DRM time update request, the DRM agent 153 resets the DRM time of the portable terminal in step 425. In more detail, the DRM agent 153 determines the difference between a new local time and an old local time i.e., between the local time before the change and the local time after the change. The difference is called a "gap" and the gap is determined according to equation (2).

$$\text{gap} = \text{new local time} - \text{old local time} \qquad \ldots \ldots \ldots (2)$$

Next, the DRM agent 153 updates the reference value by adding the gap (difference) to the previous reference value. In this manner, it is possible to maintain the validity of the DRM time, thereby protecting the DRM protected content from illegal use with a tampered reference value.

The portable terminal 100 manages the RO of the content with reference to the DRM time which secures its validity with a reliable reference time, resulting in avoidance of illegal use of the DRM protected contents.

FIG. 5 is a message flow diagram illustrating message flows in a DRM time setting method according to an exemplary embodiment of the present invention.

FIG. 5 illustrates the DRM time setting procedure when the portable terminal has rebooted with an initialization of the local time prior to a factory setting due to the battery discharge. If the local time is initialized to a value before the factory setting, the DRM time becomes invalid which requires the DRM time to be refreshed.

Referring to FIG. 5, the user clock 151 first detects that the local time is initialized to a state before the factory setting when the portable terminal 100 boots up in step 501 and transmits a DRM time update request to the DRM agent 153 in step 503.

Upon receipt of the DRM time update request, the DRM agent 153 transmits a reference time request to the download agent in step 505. In FIG. 5, the reference time information is provided by a certain network 200 according to an exemplary embodiment of the present invention. In this case, the reference time information may be extracted from the HTTP header of an HTTP message transmitted by the network 200.

Upon receipt of the reference time request, the download agent 155 transmits an HTTP Request message to the network 200 in step 507. That is, the download agent 155 receives the reference time request, accesses the network 200 and transmits the HTTP Request message to the network 200. When the HTTP Request message is received, the network 200 transmits an HTTP response message having an HTTP header to the portable terminal 100 in step 509.

Upon receipt of the HTTP Response message, the download agent 155 of the portable terminal 100 extracts the reference time information from the HTTP Response message in step 511. The reference time information is acquired from the HTTP header of the HTTP Response message. The reference time information may be provided in a GMT format. The download agent 155 may convert the reference time information to the DRM time format. The HTTP Response message corresponds to the Download Response message of FIG. 4.

Once the reference time information is acquired, the download agent 155 transmits a DRM time setting request to the DRM agent 153 of the portable terminal 100 in step 513. Upon receipt of the DRM time setting request, the DRM agent 153 transmits a local time request to the user clock 151 of the portable terminal 100 in step 515. The user clock 151 receives the local time request and transmits current local time information to the DRM agent 153 in response to the local time request in step 517.

Upon receipt of the local time information from the user clock 151, the DRM agent 153 compares the reference time information and the local time information, and sets the difference between the reference time information and the local time information as the reference value in step 519. That is, the DRM agent 153 stores the difference between the reference time information and the local time information as the reference value, and uses the reference value to acquire a valid DRM time. The reference value may be determined according to equation (1).

If a local time change is detected after setting the reference value in step 21, the user clock 151 transmits a DRM time update request to the DRM agent 153 in step 523. The DRM agent 153 receives the DRM time update request and updates the DRM time of the portable terminal 100 based on the reference value in step 525. At this time, the DRM agent 153 determines the difference between the local times before and after the local time change according to equation (2).

The DRM agent 153 adds the difference to the reference value such that the reference value is updated, thereby securing the validity of the DRM time.

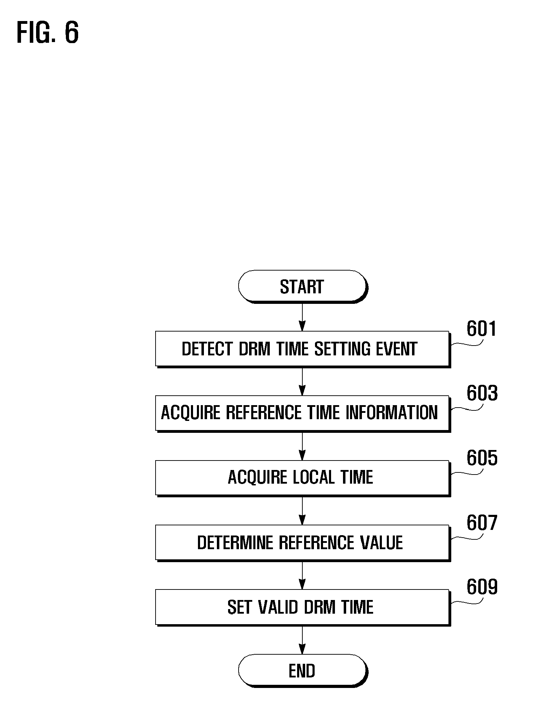

FIG. 6 is a flowchart illustrating a DRM time setting method for a portable terminal according to an exemplary embodiment of the present invention.

Referring to FIG. 6, the portable terminal 100 first detects a DRM time setting event in step 601. The DRM time setting event occurs when a content download is attempted and the portable terminal 100 is initialized after being rebooted due to its battery discharge.

Once the DRM time setting event is detected, the portable terminal acquires the reference time information in step 603. The reference time may be provided by a network, a system, or a supplementary function of the portable terminal 100.

The reference time acquisition from the network may be performed in two ways, by acquiring the reference time information whenever the portable terminal downloads content from the network and by acquiring the reference time information when the portable terminal downloads content and the network is registered with a certain list (e.g., white list). The reference time information provided by the network may be the GMT.

In the case of reference time information acquisition from the system, the reference time information may be received from another portable terminal, a computer, or a printer. The portable terminal 100 may connect to a system through a wired communication channel or a wireless communication channel. The reference time information may be the local time of the system connected to the portable terminal 100.

In the case of the supplementary function-based reference time acquisition, the reference time information may be acquired from the GPS information received by means of the GPS function and the digital broadcast data received by means of the digital broadcast receiver function of the portable terminal 100. The reference time information acquired by means of the supplementary functions may be the GMT or another type of time information included in the data received by the supplementary functions.

After acquiring the reference time information according to one of the aforementioned methods, the portable terminal 100 determines its current local time in step 605.

Next, the portable terminal 100 determines a reference value using the reference time information and the local time information and stores the reference value in step 607. The portable terminal 100 sets the DRM time based on the reference value in step 609. Once a DRM time is set, the portable terminal 100 may secure the validity of the DRM time by updating the reference value.

The DRM time setting and update may be performed when the local time of the portable terminal 100 is changed as aforementioned. According to a preset configuration, the DRM time may be reset when the portable terminal 100 attempts content download. Also, the DRM time resets may be performed according to received signal electric field strength. For instance, the portable terminal 100 may be configured such that the DRM time reset procedure is performed when the received signal electric field strength is less than a threshold level. Also, the DRM time reset procedure may be formed periodically.

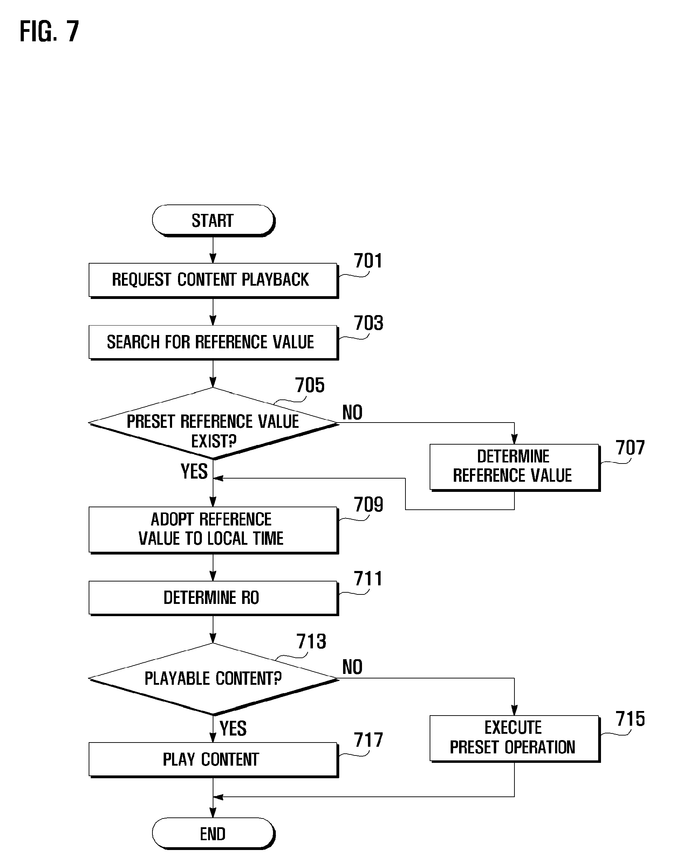

FIG. 7 is a flowchart illustrating a content execution procedure of a DRM time setting method according to an exemplary embodiment of the present invention.

Referring to FIG. 7, the portable terminal 100 determines if an instruction for playing a specific content is detected in step 701. If a content playback instruction is detected, the portable terminal 100 search for a reference value in step 703 and determines whether a preset reference value exists in step 705.

If no reference value exists, the portable terminal 100 determines and sets a reference value according to the above described reference value setting procedure in step 707 and then proceeds to step 709. Otherwise, if a reference values exists, the portable terminal 100 adopts the reference value to the local time to secure a valid DRM time in step 709.

The portable terminal 100 determines the RO corresponding to the content in step 711 and verifies the validity of the RO in step 713. For instance, the portable terminal 100 checks the constraints of the RO and determines whether the content is consumable with the RO in view with the valid DRM time. That is, the portable terminal determines whether a valid constraint for consuming the content exists with reference to the DRM time.

If the RO is invalid, i.e., the right for consuming the content has expired, the portable terminal 100 carries out a process preset or requested by the user in step 715. For instance, the portable terminal 100 displays an alert notifying an expiration of the RO and performs a RO extension process, or cancels the content playback in response to the user command. Otherwise, if the RO is valid, i.e., the right for consuming the content has not expired, the portable terminal 100 plays the content in step 717.

As described above, the DRM time setting method and apparatus of a portable terminal according to exemplary embodiments of the present invention allow securing validity of the DRM time even in an environment that does not support a Rights Object Acquisition Protocol (ROAP) or a Network Identity and Time Zone (NITZ) protocol.

The DRM time setting method and apparatus allows the portable terminal to acquire the DRM time in diverse manners, thereby improving the reliability of DRM time. For instance, the portable terminal operating with the low version of DRM protocol (i.e., DRM v.1.0) which does not support an advanced protocol, such as the OCSP may acquire the DRM time from the GMT extracted from the HTTP header received through an HTTP connection. Also, since the DRM time setting method and apparatus of the present invention allows the portable terminal to acquire reference time for setting the DRM time from diverse systems, the portable terminal may secure and maintain the valid DRM time.

The DRM time setting method and apparatus improves the manageability of the time-based DRM protected content while abiding by the DRM policy.

While the invention has been shown and described with reference to certain exemplary embodiments thereof, it will be understood by those skilled in the art that various changes in form and details may be made therein without departing from the spirit and scope of the invention as defined by the appended claims and their equivalents.

**Claims**

1. A Digital Rights Management (DRM) time setting method for a portable terminal, comprising:

   detecting a DRM time setting event;
   acquiring a reference time and a local time upon detection of the DRM time setting event;
   calculating a reference value with the reference and local time; and
   setting the DRM time based on the reference value.

2. The DRM time setting method of claim 1, wherein the reference time is one of Greenwich Mean Time (GMT) extracted from a header of a message received from a specific network, a time received from a system, and a time acquired by means of a supplementary function of the portable terminal.

3. The DRM time setting method of claim 2, wherein the reference value is a difference between the reference time and the local time and updated when the local time is changed.

4. The DRM time setting method of claim 3, wherein the reference value is updated by adding a difference between the local times before and after the change to the reference value in at least one of cases that the local time is changed, a content is downloaded, and an update timer expires periodically.

5. The DRM time setting method of claim 2, wherein the DRM time setting event occurs when the portable terminal downloads a content or reboots for initialization.

6. The DRM time setting method of claim 2, further comprising:

   checking, when a request for playing a content is detected, whether a rights object corresponding to the content is valid with reference to the DRM time; and
   playing, when the rights object is value, the content.

7. A system for setting a Digital Rights Management (DRM) of a portable terminal, comprising:

   a download agent which acquires a reference time upon detection of a DRM time setting event and requests for setting a DRM time;
   a DRM agent which acquires a local time in response to the DRM time setting request, calculates a reference value from a difference between the reference time and the local time and sets a DRM time based on the reference value; and
   a user clock which produces the local time and provides the local time in response to a request from the DRM agent.

8. The system of claim 7, wherein the user clock requests, when the local time is changed, the DRM agent to update the DRM time; and the DRM agent updates the DRM time based on the reference value in response to the DRM time update request.

9. The system of claim 8, wherein the reference time is one of Greenwich Mean Time (GMT) extracted from a header of a message received from the network, a time set in the system, and a time acquired by means of a supplementary function of the portable terminal.

10. The system of claim 8, wherein the DRM agent updates the reference value in at least one of cases that the local time is changed, a content is downloaded, and an update timer expires periodically.

11. A portable terminal comprising:

   a radio frequency unit which transmits and receives radio signals carrying contents, rights objects, and messages related to reference time acquisition;
   a memory unit which stores applications associated with Digital Rights Management (DRM) time management, the contents, the rights objects corresponding to the contents, the reference time, a local time, and a reference value; and
   a control unit which calculates the reference value based on the reference time and the local time and sets the DRM time using the reference value.

12. The portable terminal of claim 11, wherein the reference time is one of Greenwich Mean Time (GMT) extracted from a header of a message received from a specific network, a time received from a system, and a time acquired by means of a supplementary function of the portable terminal.

13. The portable terminal of claim 12, wherein the control unit determines, based on the DRM time set based on the reference value, whether a content is executable.

14. The portable terminal of claim 14, wherein the control unit comprises:

   a user clock which produces the local time and provides the local time in response to a request for the local time;
   a DRM agent which calculates the reference value using the reference time and the local time, sets the DRM time based on the reference value, and updates the reference value in at least one of cases that the local time is changed, a content is downloaded, and an update timer expires periodically; and
   a download agent which acquires the reference time from outside of the portable terminal in response to a DRM time setting event and requests the DRM agent to set the DRM time.

15. The portable terminal of claim 11, wherein the memory unit comprises:

   a time information storage which stores the reference time acquired from outside of the portable terminal and the local time of the portable terminal; and
   a reference value storage which stores a reference value calculated using the reference time and the local time.

# FIG. 1

| PORTABLE TERMINAL | ⌐100 |
|---|---|

| NETWORK | ⌐200 |
|---|---|

DOWNLOAD REQUEST [101] →

← DOWNLOAD RESPONSE [103]

105 — | EXTRACT REFERENCE TIME INFORMATION |

107 — | ACQUIRE LOCAL TIME INFORMATION |

109 — | DETERMINE REFERENCE VALUE |

111 — | STORE REFERENCE VALUE |

113 — | SET DRM TIME |

# FIG. 2

PORTABLE TERMINAL ~100

SYSTEM ~300

201 ~ DRM TIME SETTING REQUEST

TIME INFORMATION REQUEST (203)

TIME INFORMATION RESPONSE (205)

207 ~ EXTRACT REFERENCE TIME INFORMATION

209 ~ ACQUIRE LOCAL TIME INFORMATION

211 ~ SET DRM TIME

# FIG. 3

100

OUTPUT UNIT — 140

CONTROL UNIT — 150

MEMORY UNIT — 130

CONTENT STORAGE REGION — 131

TIME INFORMATION STORAGE REGION — 133

REFERENCE VALUE STORAGE REGION — 135

APPLICATION STORAGE REGION — 137

110

RF UNIT

155 — DOWNLOAD AGENT

153 — DRM AGENT

151 — USER CLOCK

INPUT UNIT — 120

EP 2 141 624 A1

# FIG. 4

151 — USER CLOCK
153 — DRM AGENT
155 — DOWNLOAD AGENT
200 — NETWORK

Download Request (401)

Download Response (403)

ACQUIRE TIME INFORMATION — 405

DRM TIME SETTING REQUEST (407)

LOCAL TIME REQUEST (409)

LOCAL TIME (411)

CALCULATE REFERENCE VALUE — 413

LOCAL TIME CHANGE — 421

DRM TIME UPDATE REQUEST(423)

UPDATE DRM TIME — 425

EP 2 141 624 A1

FIG. 5

| 151 | 153 | 155 | 200 |
|---|---|---|---|
| USER CLOCK | DRM AGENT | DOWNLOAD AGENT | NETWORK |

RESET LOCAL TIME —501

DRM TIME UPDATE REQUEST (503)

REFERENCE TIME REQUEST (505)

HTTP Request (507)

HTTP Response (509)

ACQUIRE TIME INFORMATION —511

DRM TIME SETTING REQUEST (513)

LOCAL TIME REQUEST (515)

LOCAL TIME (517)

CALCULATE REFERENCE VALUE —519

LOCAL TIME CHANGE —521

DRM TIME UPDATE REQUEST (523)

UPDATE DRM TIME —525

EP 2 141 624 A1

# FIG. 6

START

DETECT DRM TIME SETTING EVENT — 601

ACQUIRE REFERENCE TIME INFORMATION — 603

ACQUIRE LOCAL TIME — 605

DETERMINE REFERENCE VALUE — 607

SET VALID DRM TIME — 609

END

# FIG. 7

```
                    ┌─────────────┐
                    │    START    │
                    └─────────────┘
                           │
                           ▼
          ┌──────────────────────────────┐  701
          │   REQUEST CONTENT PLAYBACK    │
          └──────────────────────────────┘
                           │
                           ▼
          ┌──────────────────────────────┐  703
          │    SEARCH FOR REFERENCE VALUE │
          └──────────────────────────────┘
                           │
                           ▼                705
                   ╱─────────────╲                    NO
                  ╱ PRESET REFERENCE╲──────────────────────┐
                  ╲  VALUE EXIST?   ╱                       │
                   ╲───────────────╱                        ▼
                         │                        ┌──────────────────┐  707
                        YES ◄───────────────┐     │    DETERMINE      │
                         │                  │     │  REFERENCE VALUE  │
                         ▼                  │     └──────────────────┘
          ┌──────────────────────────────┐ │  709
          │      ADOPT REFERENCE          │ │
          │     VALUE TO LOCAL TIME       │─┘
          └──────────────────────────────┘
                         │
                         ▼
          ┌──────────────────────────────┐  711
          │         DETERMINE RO          │
          └──────────────────────────────┘
                         │
                         ▼                713
                 ╱─────────────╲            NO
                ╱ PLAYABLE CONTENT?╲──────────────────┐
                ╲───────────────╱                      │
                       │                               ▼
                      YES          717       ┌──────────────────┐  715
                       ▼                      │     EXECUTE       │
          ┌──────────────────────────────┐   │  PRESET OPERATION │
          │         PLAY CONTENT          │   └──────────────────┘
          └──────────────────────────────┘            │
                       │◄──────────────────────────────┘
                       ▼
                ┌─────────────┐
                │     END     │
                └─────────────┘
```

Europäisches
Patentamt

European
Patent Office

Office européen
des brevets

## EUROPEAN SEARCH REPORT

Application Number

EP 09 16 4210

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/121432 A1 (KIM CHI-HURN [KR]) 31 May 2007 (2007-05-31) * paragraph [0031] * * paragraph [0036] * * paragraph [0039] * * paragraph [0040] * * paragraph [0044] * * paragraph [0046] * * paragraph [0051] - paragraph [0053] * * paragraph [0055] * * figure 4 * | 1-15 | INV. G06F21/00 G06F21/02 |
| X | US 2003/105890 A1 (SAKUMA TAKESHI [JP]) 5 June 2003 (2003-06-05) * paragraph [0003] * * paragraph [0079] - paragraph [0086] * * paragraph [0145] * * figure 5 * | 1-15 | |
| P,X | EP 2 060 989 A (SAMSUNG ELECTRONICS CO LTD [KR]) 20 May 2009 (2009-05-20) * paragraph [0030] * * paragraph [0039] * * paragraph [0051] * * figure 1 * | 1-15 | TECHNICAL FIELDS SEARCHED (IPC)<br><br>G06F |
| A | EP 0 635 790 A (IBM [US]) 25 January 1995 (1995-01-25) * column 9, line 15 - line 36 * | 10,14 | |

The present search report has been drawn up for all claims

| Place of search | Date of completion of the search | Examiner |
|---|---|---|
| The Hague | 1 October 2009 | van Praagh, Kay |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 09 16 4210

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2009

| Patent document cited in search report | | Publication date | Patent family member(s) | | Publication date |
|---|---|---|---|---|---|
| US 2007121432 | A1 | 31-05-2007 | KR | 20070056432 A | 04-06-2007 |
| US 2003105890 | A1 | 05-06-2003 | CN | 1422095 A | 04-06-2003 |
| | | | US | 2007079196 A1 | 05-04-2007 |
| EP 2060989 | A | 20-05-2009 | CN | 101430745 A | 13-05-2009 |
| | | | KR | 20090046980 A | 12-05-2009 |
| | | | US | 2009119217 A1 | 07-05-2009 |
| EP 0635790 | A | 25-01-1995 | DE | 69425793 D1 | 12-10-2000 |
| | | | DE | 69425793 T2 | 12-04-2001 |
| | | | JP | 2628619 B2 | 09-07-1997 |
| | | | JP | 7036559 A | 07-02-1995 |
| | | | US | 5444780 A | 22-08-1995 |
| | | | US | 5500897 A | 19-03-1996 |

EPO FORM P0459

For more details about this annex : see Official Journal of the European Patent Office, No. 12/82